(19) Europäisches Patentamt
European Patent Office
Office européen des brevets

(11) **EP 4 703 400 A1**

(12) **EUROPÄISCHE PATENTANMELDUNG**

(43) Veröffentlichungstag:
**04.03.2026 Patentblatt 2026/10**

(21) Anmeldenummer: **25199251.7**

(22) Anmeldetag: **01.09.2025**

(51) Internationale Patentklassifikation (IPC):
*C08G 18/48* (2006.01)  *C08G 18/16* (2006.01)
*C08G 18/18* (2006.01)  *C08G 18/22* (2006.01)
*C08G 18/40* (2006.01)  *C08G 18/42* (2006.01)
*C08G 18/76* (2006.01)  *C08J 9/00* (2006.01)
*C08J 9/08* (2006.01)  *C08J 9/14* (2006.01)
*C08G 18/09* (2006.01)  *C08G 101/00* (2006.01)

(52) Gemeinsame Patentklassifikation (CPC):
C08G 18/7664; C08G 18/092; C08G 18/163;
C08G 18/1808; C08G 18/225; C08G 18/4018;
C08G 18/4216; C08G 18/4244; C08G 18/4808;
C08G 18/485; C08G 18/4879; C08J 9/0038;
C08J 9/0042; C08J 9/08; C08J 9/141;    (Forts.)

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **02.09.2024 EP 24197918**

(71) Anmelder: **Covestro Deutschland AG**
**51373 Leverkusen (DE)**

(72) Erfinder:
• **MARBACH, Jakob**
  **51371 Leverkusen (DE)**
• **THIEL, Daniel**
  **51375 Leverkusen (DE)**
• **ABELS, Rene**
  **51061 Köln (DE)**
• **OFORI, Philip**
  **45131 Essen (DE)**

(74) Vertreter: **Levpat**
**c/o Covestro AG**
**Gebäude K12**
**51365 Leverkusen (DE)**

(54) **PUR/PIR-HARTSCHAUMSTOFFE AUS POLYOLMISCHUNGEN AUS ISOPROPYLIDENDIPHENOL-BASIERTEN POLYETHERPOLYOLEN UND POLYESTERPOLYOLEN**

(57) Die vorliegende Erfindung betrifft eine isocyanat-reaktive Komponente geeignet für die Herstellung von PUR/PIR - Hartschäumen, enthaltend BPA-Harz Ethoxylate und Poly(ether)esterpolyole, eine Reaktionsmischung enthaltend die isocyanat-reaktive Komponente und ein Verfahren zur Herstellung von Polyurethan - und Polyurethan-Polyisocyanurat-Hartschaumstoffen umfassend die Umsetzung dieser isocyanatreaktiven Komponente mit Polyisocyanaten.

EP 4 703 400 A1

(52) Gemeinsame Patentklassifikation (CPC): (Forts.)
C08G 2101/00; C08G 2110/0025; C08G 2110/005;
C08J 2205/10

**Beschreibung**

Die vorliegende Erfindung betrifft ein neues Verfahren zur Herstellung von Polyurethan - und Polyurethan-Polyisocyanurat-Hartschaumstoffen umfassend die Umsetzung einer Polyolmischung aus Isopropylidendiphenol-basierten Polyetherpolyolen und aromatischen Polyesterpolyolen mit Polyisocyanaten.

Polyurethan-Polyisocyanurat-Hartschaumstoffe im Sinne dieser Anmeldung sind dadurch gekennzeichnet, dass Isocyanatgruppen im Überschuss gegenüber Isocyanat-reaktiven Gruppen eingesetzt werden, so dass sich sowohl Urethangruppen als auch in Folge von Isocyanat-Trimerisierungsreaktionen Isocyanuratstrukturelemente, und gegebenenfalls durch die Reaktion mit Wasser Harnstoffgruppen bilden (Index > 150). Polyurethan-Polyisocyanurat-Hartschaumstoffe können neben den Urethangruppen, Harnstoffgruppen und Isocyanuratstrukturen noch weitere Gruppen enthalten, z.B. solche, wie sie durch Reaktion der Isocyanatgruppe mit anderen Gruppen als mit Hydroxylgruppen bzw. weiteren Isocyanatgruppen entstehen. Die Reaktion der Isocyanatgruppe mit Harnstoffgruppen führt beispielsweise zu Biuretstrukturen, in ähnlicher Weise werden durch Reaktion von Isocyanatgruppen mit Urethangruppen Allophanatstrukturen erhalten. Diese Strukturen liegen dann gemeinsam mit den Urethan-, Harnstoff- und Isocyanuratgruppen im Polymer vor.

Polyurethan - und Polyurethan-Polyisocyanurat-Hartschaumstoffe werden hierin einzeln oder gemeinsam als "PUR/PIR - Hartschaumstoffe" bezeichnet.

Die PUR/PIR - Hartschaumstoffe werden typischerweise durch Umsetzung einer Isocyanatkomponente mit einer isocyanat-reaktiven Komponente in Gegenwart eines Treibmittels hergestellt. Weiterhin können auch Additive wie Schaumstabilisatoren und Flammschutzmittel zugesetzt werden.

Aus wirtschaftlichen Gründen ist es erstrebenswert möglichst preiswerte Rohstoffe einzusetzen. Bezogen auf die Isocyanat-reaktive Komponente einer PUR/PIR-Hartschaumrezeptur bedeutet dies beispielsweise die Verwendung von an sich wertlosen Produktionsrückständen, wobei als Grundvoraussetzung das Vorhandensein oder die Erzeugbarkeit von Hydroxylgruppen gegeben sein muss. Als ein weiterer Aspekt der Verwendung derartiger Produktionsrückstände sei das Streben nach verbesserter Nachhaltigkeit genannt. Die Umarbeitung von Produktionsrückständen zu wertvollen PUR-/PIR-Hartschäumen vermeidet deren Entsorgung, etwa durch Verbrennen, und schont somit die Umwelt und trägt zur Reduktion des Verbrauchs an sich knapper Rohstoffe, letztlich des Rohöls, bei.

Die Herstellung von Polyetherpolyolen aus hydroxylfunktionellen Rückständen aus der Bisphenol-A-Produktion ("BPA - Harz") ist bekannt. In dieser Anmeldung umfasst der Begriff des BPA-Harzes grundsätzlich alle Destillationsrückstände von Bisphenol-A-Produktionen, welche eine Mischung von Isomeren des Isopropylidendiphenols sowie weitere Komponenten enthalten, die von Phenol, Aceton und / oder Isopropylidendiphenol abgeleitet sind.

Zum Beispiel ist die Herstellung von Polyetherpolyolen, umfassend

i. mindestens 10 Gew.-% eines Ethoxylates von 4,4'-Isopropylidendiphenol,

ii. mindestens 5 Gew.-%, bevorzugt mindestens 10 Gew.-%, eines Ethoxylates von 2,4'- und 2,2'-Isopropylidendiphenol, und

iii. mindestens 10 Gew.-% eines Ethoxylates von Komponenten, die Strukturelemente enthalten, welche von Phenol, Aceton und / oder Isopropylidendiphenol abgeleitet sind, aber nicht Isomere des Isopropylidendiphenols sind,

durch die Ethoxylierung von BPA-Harzen sowie ihre Verwendung zur Herstellung von PUR/PIR - Hartschaumstoffen in der EP 3294787 A beschrieben.

JP H09 71628 A, JP 2011 017027 A, WO 98/37116 A1, DE 698 02 846 T2 und US 2011/046251 Al offenbaren jeweils ethoxyliertes Bisphenol A und seine Verwendung zur Herstellung von PUR/PIR-Hartschaumstoffen, allerdings wird weder ethoxyliertes BPA-Harz eingesetzt noch ist die isocyanat-reaktive Komponente frei von Amin-gestarteten Polyetherpolyolen.

Unter "Ethoxylierung" ist hierbei zu verstehen, dass das zur Alkoxylierung des BPA-Harzes verwendete Alkylenoxidgemisch zu mindestens 50 Gew.-% aus Ethylenoxid, bevorzugt zu mindestens 70 Gew.-% aus Ethylenoxid, besonders bevorzugt zu mindestens 90 Gew.-% aus Ethylenoxid, insbesondere bevorzugt zu mindestens 95 Gew.-% und ganz besonders bevorzugt zu 100 Gew.-%, jeweils bezogen auf die Gesamtmenge an Alkylenoxidgemisch bzw. Alkylenoxid, aus Ethylenoxid besteht. In gleicher Weise umfasst der Begriff "Ethoxylierung" die Alkoxylierung des BPA-Harzes mit Epoxidzusammensetzungen mit den angegebenen Ethylenoxidgehalten. Das Ethylenoxid kann im Gemisch mit den ggf. mitzuverwendenden anderen Alkylenoxiden oder blockweise als Anfangs-, Mittel- oder Endblock dosiert werden. Bevorzugt hergestellt und eingesetzt werden BPA-Harz-Alkoxylate mit Ethylenoxidendblöcken, da diese durch erhöhte Konzentrationen an primären Endgruppen gekennzeichnet sind, welche den Systemen die für PUR/PIR-Schaumstoffanwendungen notwendige Isocyanatreaktivität verleihen.

In EP 3294787 A werden ebenfalls PUR/PIR - Schäume beschrieben, welche mit einer Polyolkomponente hergestellt werden, die vollständig oder zu einem hohen Anteil (> 65 Gew.-%) aus ethoxyliertem BPA - Harz besteht. Diese Schäume weisen allerdings qualitative Defizite auf, was der breiten Kommerzialisierung bisher im Weg stand.

Überraschenderweise wurde nun aber gefunden, dass die Zugabe von bestimmten Anteilen von Polyetherpolyolen aus ethoxylierten BPA-Harzen zu Polyesterpolyolen sich positiv auf die Durchhärtungsgeschwindigkeit von PUR/-PIR-Hartschaumreaktionen auswirkt, ohne negative Effekte auf andere Eigenschaften der Schäume. Der Zusatz der ethoxylierten BPA-Harz Polyole führt außerdem zu erhöhten Eigenreaktivitäten, was die Herstellung von PUR/PIR-Hartschaumstoffen ohne den Zusatz von dem Fachmann bekannten üblichen Aminkatalysatoren erlaubt.

Die Erfindung betrifft daher eine isocyanat-reaktive Komponente A) geeignet für die Herstellung von PUR/PIR - Hartschäumen, enthaltend eine Komponente a1) bestehend aus BPA-Harz Ethoxylaten und eine Komponente a2) bestehend aus Polyesterpolyolen und/oder Polyetheresterpolyolen, dadurch gekennzeichnet, dass das Massenverhältnis von al : a2 = 0,05 - 1,80 beträgt und die isocyanat-reaktive Komponente im Wesentlichen kein Amin-gestartetes Polyetherpolyol enthält.

Im Rahmen dieser Erfindung bedeutet dies nicht nur, dass die isocyanat-reaktive Komponente kein Polyetherpolyol enthält, das durch Alkoxylierung eines primären oder sekundären Amins, das also am Stickstoffatom alkoxyliert wird, erhältlich ist, sondern dass die isocyanat-reaktive Komponente kein Polyetherpolyol enthält, das als Starterkomponente eine Verbindung aufweist, die ein Stickstoffatom aufweist und folglich ein Amin ist. Ausgenommen sind hierbei herstellungsbedingte Amin-Verunreinigungen in den Polyolen der erfindungsgemäßen isocyanat-reaktiven Komponente, zum Beispiel durch Aminkatalysatoren, die zum Beispiel zur Herstellung der erfindungsgemäßen Polyole verwendet werden.

Bevorzugt umfasst die isocyanat-reaktive Komponente kein Polymerpolyol. Mit anderen Worten umfasst die isocyanat-reaktive Komponente bevorzugt kein polymer-dispergiertes Polyol, das feine Polymerpartikel in einem Basispolyol dispergiert aufweist.

In einer bevorzugten Ausführungsform umfasst die isocyanat-reaktive Komponente A)

**a1)** 5 - 64,0 Gew.-%, bevorzugt 10,0 - 60,0 Gew.-% und mehr bevorzugt 12,0 - 58,0 Gew.-% BPA-Harz-Ethoxylat, und

**a2)** 36,0 - 95,0 Gew.-%, bevorzugt 40 - 80 Gew.-%, Polyesterpolyol und /oder Poly(ether)esterpolyol,

jeweils bezogen auf die Gesamtmenge an a1 und a2.

Die Erfindung betrifft ebenfalls ein Verfahren zur Herstellung eines PUR/PIR-Hartschaumes, bei dem eine Reaktionsmischung aus isocyanat-reaktiver Komponente A) und eine Polyisocyanatkomponente B) in Gegenwart eines Treibmittels C) und gegebenenfalls Katalysatoren D) sowie Hilfs- und Zusatzstoffen E) miteinander umgesetzt werden, insbesondere dadurch gekennzeichnet, dass die isocyanat-reaktive Komponente A) 5 - 65 Gew.-%, bevorzugt 10 - 60 Gew.-% und besonders bevorzugt 12 - 58 Gew.-% eines ethoxylierten BPA-Harzes a1) und 35 - 95 Gew.-%, bevorzugt 40 - 80 Gew.-%, eines Poly(ether)esterpolyols a2) umfasst.

In dieser Anmeldung werden, falls verwendet, mit den singulären Begriffen für Komponenten (z.B. "Polyol", "Ethoxylat") jeweils auch eine Mischung mehrerer Verbindungen dieser Klasse bezeichnet. Der Begriff "Poly(ether) esterpolyole" umfasst Polyester- und Polyetheresterpolyole.

PUR/PIR-Hartschaumstoffe bzw. PUR/PIR-Hartschäume im Sinne der vorliegenden Erfindung sind insbesondere solche PUR/PIR-Schäume, deren Rohdichte gemäß DIN EN ISO 3386-1-98 in der Fassung vom September 2010 im Bereich von 15 kg/m$^3$ bis 300 kg/m$^3$ liegt und deren Druckfestigkeit nach DIN EN 826 in der Fassung vom Mai 1996 im Bereich von 0,08 MPa bis 5 MPa liegt.

Die OH-Zahl (auch: Hydroxylzahl) gibt die Menge an Kaliumhydroxid in Milligramm an, welche der bei einer Acetylierung von einem Gramm Substanz gebundenen Menge Essigsäure gleichwertig ist. Die OH-Zahl wird im Rahmen der vorliegenden Erfindung nach der Norm DIN 53240-1 (Juni 2013) bestimmt.

"Funktionalität" bezeichnet im Rahmen der vorliegenden Erfindung die theoretische, aus den bekannten Einsatzstoffen und deren Mengenverhältnissen berechnete mittlere Funktionalität (Anzahl an gegenüber Isocyanaten bzw. gegenüber Polyolen reaktiven Funktionen im Molekül).

Bei dem "BPA-Harz" gemäß dieser Erfindung handelt es sich um eine Zusammensetzung, welche als Destillationsrückstand bei der Produktion von Bisphenolen, z.B. Bisphenol A, Bisphenol F, Bisphenol AF, insbesondere bei der Bisphenol A-Produktion anfällt.

Das BPA-Harz enthält bevorzugt mindestens 10 Gew.-%, bevorzugt 10 - 60 Gew.-% an 4,4'-Isopropylidendiphenol, sowie mindestens 5 Gew.-%, bevorzugt 10 - 40 Gew.-% der 2,4'- und 2,2'-Isomeren des Bisphenol-Grundkörpers, sowie mindestens 10 Gew.-%, bevorzugt 10 - 40 Gew.-% an Verbindungen mit Chroman- und/oder Indan-Grundkörpern.

Die BPA-Harz-Ethoxylate a1) werden erfindungsgemäß zusammen mit Poly(ether)esterpolyolen a2) in einer isocyanat-reaktiven Komponente A) eingesetzt, welche zur Herstellung von PUR/PIR-Hartschäumen geeignet ist.

Die isocyanat-reaktive Komponente A) kann neben den Komponenten a1) und a2) weitere isocyanat-reaktive Komponenten a3) enthalten, welche von a1) und a2) verschieden sind.

Die Komponente a3) umfasst bevorzugt auch weitere Polyole.

Bei den in den Komponenten a2) und a3) eingesetzten Polyolen handelt es sich bevorzugt um Polyole mit OH - Zahlen von 10 bis 850 mg KOH/g, insbesondere von 20 bis 500 mg KOH/g.

*Komponente a1)*

Bei dem in dieser Erfindung eingesetzten BPA-Harz-Ethoxylat a1) handelt es sich bevorzugt um eine Zusammensetzung, umfassend

 i. mindestens 10 Gew.-%, bevorzugt mindestens 20 Gew.-%, besonders bevorzugt mindestens 30 Gew.-% eines Ethoxylates von 4,4'-Isopropylidendiphenol,

 ii. mindestens 5 Gew.-%, bevorzugt mindestens 10 Gew.-%, eines Ethoxylates von 2,4'- und 2,2'-Isopropylidendiphenol, und

 iii. mindestens 10 Gew.-%, bevorzugt mindestens 20 Gew.-%, außerdem bevorzugt mindestens 30 Gew.-%, besonders bevorzugt 40 Gew.-% eines Ethoxylates weiterer Komponenten, die Strukturelemente enthalten, welche von Phenol, Aceton und / oder Isopropylidendiphenol abgeleitet sind (ausschließlich der Isomeren des Isopropylidendiphenols), wobei sich

die Angaben in Gew.-% jeweils auf das Gesamtgewicht der Zusammensetzung beziehen.

Das in der Komponente A) eingesetzte ethoxylierte BPA-Harz weist bevorzugt eine mittlere Hydroxylzahl von 100 bis 400 mg KOH/g, insbesondere bevorzugt von 120 bis 300, ganz besonders bevorzugt von 130 bis 250 mg KOH/g und eine bei 25 °C gemessene Viskosität von 600 bis 10000 mPa · s, bevorzugt von 800 bis 8000, besonders bevorzugt 1000 bis 6000 auf.

Das in der Polyolkomponente A) dieser Erfindung eingesetzte ethoxylierte BPA - Harz al) kann entsprechend der in EP 3294787 A vorgestellten Methoden wie folgt erfolgen:

Die Alkoxylierung wird vorzugsweise in homogener Phase durchgeführt, z.B. indem man das BPA-Harz in einem Rührautoklaven zusammen mit einem geeigneten Katalysator vorlegt und bei erhöhter Temperatur langsam Ethylenoxid zudosiert. Als Katalysatoren kommen tertiäre Amine mit aliphatischen, cycloaliphatischen, aromatischen und/oder araliphatischen an das Stickstoffatom gebundenen Resten, und/oder aromatische Amine in Frage, wobei das Stickstoffatom auch Teil eines Ringsystems sein kann und/oder wobei das Stickstoffatom Teil eines aromatischen Systems sein kann. Systeme mit mehreren Stickstoffatomen sind selbstverständlich umfasst. Ebenfalls können Hydroxide oder Oxide wie die der Alkali- und Erdalkalimetalle als Katalysatoren verwendet werden. Bevorzugt werden die erwähnten tertiären und/oder aromatischen Amine eingesetzt. Als Katalysatoren eingesetzte Amine können weitere funktionelle Gruppen, wie z.B. Hydroxylgruppen, einschließlich phenolische Hydroxylgruppen oder auch isocyanat-reaktive Aminogruppen aufweisen. Folgende tertiäre Amine seien beispielhaft genannt: Triethylendiamin, N,N-Dimethylcyclohexylamin, 1-Methyl-4-dimethylaminoethyl-piperazin, Triethylamin, Tributylamin, N,N-Dimethylbenzylamin, Dicyclohexylmethylamin, N,N',N"-Tris-(dimethylaminopropyl)hexa-hydrotriazin, Tris-(dimethylaminopropyl)amin, Tris(dimethylaminomethyl)phenol, Dimethylaminopropylformamid, N,N,N',N'-Tetramethylethylendiamin, N,N,N',N'-Tetramethylbutandiamin, N,N,N',N'-Tetramethylhexandiamin, Pentamethyldiethylentriamin, Pentamethyldipropylentriamin, Tetramethyldiaminoethylether, N,N'-Dimethylpiperazin, 1-Azabicyclo[3.3.0]octan, Bis-(dimethylaminopropyl)-harnstoff N-Methylmorpholin, N-Ethylmorpholin, N-Cyclohexylmorpholin, 2,3-Dimethyl-3,4,5,6-tetrahydropyrimidin, Triethanolamin, Triisopropanolamin, N-Methyldiethanolamin, N-Ethyldiethanolamin, N,N-Dimethylaminoethanol und Tris-(N,N-di-methylaminopropyl)-s-hexahydrotriazin. Beispiele für geeignete aromatische Amine sind 1,2-Dimethylimidazol, N-Methylimidazol, Imidazol und/oder N,N-Dimethylaminopyridin. Geeignete Hydroxide der Alkali- und Erdalkalimetalle sind Lithium- Natrium-. Kalium-, Rubidium-, Caesium-, Magnesium-, Calcium-, Strontium- und Bariumhydroxid.

Bei den tertiären Aminen sind solche bevorzugt, die höchstens 3 aminische N-Atome aufweisen. Von den aromatischen Aminen sind Imidazol und seine Derivate, insbesondere N-Methylimidazol, bevorzugt.

Bei den Alkali- und Erdalkalihydroxid sind Natrium- und Kaliumhydroxid bevorzugt.

Vorteilhaft werden bei Verwendung von tertiären und/oder aromatischen Aminen Katalysatorkonzentrationen von 300 bis 5000 ppm, bezogen auf alle Einsatzstoffe, eingesetzt. Alkali- und Erdalkalihydroxide werden in Konzentrationen von 50 bis 5000 ppm, bevorzugt von 100 bis 3000 ppm, besonders bevorzugt von 100 bis 1500 ppm verwendet.

Es können auch Gemische mehrerer aminischer Katalysatoren, Gemische aus mehreren Alkali- und Erdalkalihydroxiden, sowie Gemische aus aminischen Katalysatoren und Alkali- bzw. Erdalkalihydroxiden eingesetzt werden.

Neben Ethylenoxid zur Mitverwendung ggf. geeignete Alkylenoxide sind beispielsweise Propylenoxid, 1,2-Butylenoxid bzw. 2,3-Butylenoxid und/oder Styroloxid. Bevorzugt wird ggf. Propylenoxid mitverwendet. Der Anteil an Ethylenoxid sollte mindestens 50 Gew.-%, bevorzugt mindestens 70 Gew.-%, besonders bevorzugt mindestens 90 Gew.-%, insbesondere bevorzugt mindestens 95 Gew.-% und ganz besonders bevorzugt 100 Gew.-% bezogen auf die Gesamtmenge der dosierten Alkylenoxide betragen.

Bevorzugt eingesetzte ethoxylierte BPA-Harze sind weiterhin solche, deren Katalysatoren nach beendeter Synthese nicht neutralisiert werden. Selbstverständlich können den BPA-Harz-Ethoxylaten Hilfs- und Zusatzstoffe, wie z.B. Antioxidantien, zugesetzt werden.

Das Molverhältnis von BPA-Harz zu ethylenoxidhaltigem Alkylenoxidgemisch wird so gewählt, dass pro phenolischer Hydroxylgruppe mindestens 1,5 mol Alkylenoxid, bevorzugt mindestens 1,5 mol Ethylenoxid eingesetzt werden.

Da die Konzentration an phenolischen Hydroxylgruppen im BPA-Harz im Einzelfall analytisch schwierig erfassbar sein kann, kann es vorteilhaft sein, zunächst einen Probeethoxylierungsversuch mit einer ausreichend hohen Menge an Ethylenoxid durchzuführen und aus der gefundenen Hydroxylzahl des Produktes und der Menge an eingesetztem BPA-Harz auf die Konzentration an phenolischen Hydroxylgruppen im BPA-Harz zurückzuschließen.

Weiterhin hat es sich als vorteilhaft erwiesen, das BPA-Harz bei erhöhter Temperatur, z.B. 50 bis 100 °C ggf. bereits zusammen mit dem verwendeten Katalysator vorzulegen, den Luftsauerstoff durch mehrmaliges Evakuieren und anschließendes Belüften mit Stickstoff zu verdrängen, wobei Katalysatoren mit niedrigen Siedepunkten, etwa Triethylamin erst nach dem Verdrängen des Luftsauerstoffes zudosiert werden sollten.

Die Umsetzung der phenolischen Hydroxylgruppen des BPA-Harzes mit dem ethylenoxidhaltigen Alkylenoxidgemisch erfolgt bei erhöhter Temperatur, vorzugsweise bei 70 bis 140 °C, besonders bevorzugt bei 90 bis 130 °C. Hierbei kann auch ein Lösungsmittel zum Einsatz kommen. Bevorzugt wird die Umsetzung jedoch ohne Lösungsmittel ausgeführt. Die Temperatur der exothermen Alkylenoxidadditionsreaktion muss gegebenenfalls durch Kühlung auf dem gewünschten Niveau gehalten werden

Die Zugabe des ethylenoxidhaltigen Alkylenoxidgemischs zur Mischung bestehend aus BPA-Harz und Katalysator erfolgt vorzugsweise kontinuierlich über einen längeren Zeitraum, beispielsweise 4 bis 20 Stunden. Das ethylenoxidhaltige Alkylenoxidgemisch kann aber auch diskontinuierlich in mehreren Portionen zugeben werden. Die Dosierung des wenigstens einen Alkylenoxids erfolgt so, dass die sicherheitstechnischen Druckgrenzen des Reaktorsystems nicht überschritten werden. Diese richten sich naturgemäß nach den im Einzelfall vorliegenden apparativen Gegebenheiten, wobei der Prozess im Allgemeinen bei einem Absolutdruck im Bereich von 1 mbar bis 10 bar, besonders bevorzugt von 1 mbar bis 4 bar ausgeführt wird. Insbesondere bei der Dosierung von reinem Ethylenoxid ist aus verfahrenssicherheitstechnischen Gründen vorteilhafterweise darauf zu achten, dass ein ausreichender Inertgaspartialdruck im Reaktor während der Anfahr- und Dosierphase aufrechterhalten wird. Dieser sollte in der Regel 50 % des Gesamtdrucks nicht unterschreiten. Der erforderliche Inertgaspartialdruck kann beispielsweise durch Edelgase oder Stickstoff eingestellt werden.

Nach beendeter Zugabe des ethylenoxidhaltigen Alkylenoxidgemischs schließt sich üblicherweise eine Nachreaktion an, um die Umsetzung zu vervollständigen. Diese liegt in der Regel im Bereich von 5 - 30 Stunden, kann aber auch mehr als 30 Stunden betragen. Nach Ablauf der Nachreaktionszeit kann ein Vakuumschritt folgen, um Reste ggf. nicht umgesetzter Epoxide aus der Reaktionsmischung zu entfernen. Dieser Vakuumschritt kann beispielsweise bei einem Absolutdruck von 500 mbar bis 10 mbar über eine Zeitdauer von 0,1 bis 5 Stunden durchgeführt werden. Die Entfernung von Spuren unreagierter Epoxide oder anderer geruchsbildender flüchtiger organischer Verbindungen kann darüber hinaus nach der (Nach-)Reaktionsphase und ggf. dem Vakuumschritt auch durch Strippen unterstützt werden. Durch Strippen werden flüchtige Bestandteile, wie beispielsweise (Rest-)Alkylenoxide oder nicht alkoxylierbare Nebenkomponenten aus dem BPA-Harz, unter Einleiten von Inertgasen und / oder Wasserdampf in die Flüssigphase bei gleichzeitig angelegtem Vakuum, beispielsweise durch Durchleiten von Inertgas und/oder Wasserdampf bei einem Absolutdruck von 5 mbar bis 500 mbar entfernt. Hilfsweise kann das Einleiten von Wasserdampf auch durch direktes Einleiten von Wasser unter die Flüssigkeitsoberfläche, bevorzugt bei Temperaturen > 100 °C und einem Absolutdruck von 5 mbar bis 500 mbar ersetzt werden. Die einzuleitende Wassermenge bzw. die einzuleitende Wasserdampfmenge kann experimentell ermittelt werden, bevorzugt werden zwischen 10 und 30 Gew.-% Wasser bzw. Wasserdampf, bezogen auf die zu reinigende Polyolmenge eingeleitet. Das Entfernen flüchtiger Bestandteile, entweder im Vakuum und / oder durch Strippen, erfolgt bei Temperaturen von 20 °C bis 200 °C, bevorzugt bei 50 °C bis 160 °C und vorzugsweise unter Rühren. Die Strippvorgänge können auch in sog. Strippkolonnen durchgeführt werden, in denen dem Produktstrom ein Inertgas- oder Wasserdampfstrom entgegengeleitet wird. Bei solchen Strippkolonnen handelt es sich bevorzugt um Kolonnen mit Einbauten oder gepackte Kolonnen. In solchen Kolonnen wird die Überführung der flüchtigen Nebenkomponenten in die Gasphase durch Vergrößerung der Kontaktfläche zwischen Flüssigkeit und Gasraum beschleunigt. Bevorzugt wird das Strippen mit Wasserdampf oder Wasser, ggf. durch gleichzeitiges Einleiten von Inertgas(en) durchgeführt. Eine ausführliche Darstellung von für die Durchführung von Alkoxylierungs- (Ethoxylierungs)-Reaktionen geeigneter Reaktionsführungsbedingungen und Apparaten ist beispielsweise in US 2014/0243560 A1 gegeben.

In einer Ausführungsform werden die zur Alkoxylierung des BPA-Harzes eingesetzten basischen Katalysatoren neutralisiert.

Als geeignete Reagenzien zur Neutralisation des bei der Alkoxylierung des BPA-Harzes eingesetzten basischen Katalysators kommen organische und/oder anorganische Protonsäuren (Bronstedtsäuren) in Betracht. Bevorzugt sind nichtoxidierende organische und/oder anorganische Protonsäuren, beispielsweise Schwefelsäure, Phosphorsäure, Dibutylphosphat, Salzsäure, Milchsäure, Adipinsäure, Glutarsäure, Bernsteinsäure, oder ähnliche. Sie können dem Reaktionsgemisch sowohl in reiner Form oder als wässrige Lösung nach beendeter Alkoxylierungsreaktion zugesetzt werden. Bevorzugt ist die Verwendung von wässrigen Lösungen.

In gleicher Weise geeignet sind Polyesterpolyole mit Anteilen an endständigen Carboxylgruppen, wie sie durch Polykondensation aus niedermolekularen Polyolen und niedermolekularen Polycarbonsäuren erhalten werden können.

Die Neutralisation erfolgt beispielsweise durch Zugabe der Säure unter Rühren und bei Temperaturen des Reaktionsgemisches von 25 bis 95 °C; sie kann aber auch bei niedrigeren oder höheren Temperaturen erfolgen. Die Menge Neutralisationsagenz wird dabei so bemessen, dass je Mol an basischem Katalysator mindestens 0,5 Mole saure Protonen eingetragen werden. Bevorzugt sind Molverhältnisse von basischem Katalysator zu sauren Protonen von 1 : 0,5 bis 1 : 5, besonders bevorzugt 1 : 0,75 bis 1 : 2 und ganz besonders bevorzugt 1 : 0,8 bis 1 : 1,5.

Aminische Katalysatoren können auch durch Alkylierung neutralisiert werden. Geeignete Reagenzien zur Alkylierung sind beispielsweise organische Sulfonsäureester, z.B. p-Toluolsulfonsäurealkylester, Schwefelsäuredialkylester, z.B. Dimethylsulfat, Methyljodid, Oxalsäuredialkylester und Alkylester anderer organischer Säuren. Die Alkylreste können beliebiger Struktur sein, beispielhaft genannt werden können Methyl, Ethyl, Propyl, Isopropyl, n-Butyl und Isobutyl. Bezüglich der Molverhältnisse geht man analog zur Neutralisierungsvariante mit Protonsäuren vor.

Wie bereits in EP 3294787 A offenbart, kann über den Weg der Neutralisierung der basischen Katalysatoren ein vorteilhaftes Verarbeitungsverhalten des alkoxylierten BPA-Harzes in der Verschäumung zum PUR/PIR-Schaumstoff sowie vorteilhafte Schaumeigenschaften, z.B. im Hinblick auf Sprödigkeit, eingestellt werden. Insbesondere ist es über den Weg der Neutralisierung möglich, Start- und Abbindezeiten der PUR/PIR - Reaktion einzustellen.

*Komponente a2)*

Die Komponente A) enthält weiterhin Polyester- und / oder Polyetheresterpolyole.

Polyesterpolyole sind insbesondere Polykondensate aus Di- sowie weiterhin Tri-, und Tetraolen und Di- sowie weiterhin Tri- und Tetracarbonsäuren oder Hydroxycarbonsäuren oder Lactonen, bevorzugt werden aromatische Dicarbonsäuren oder Gemische aus aromatischen und aliphatischen Dicarbonsäuren verwendet. Unter "aromatischen Polyestern" versteht man dabei solche Polyester, zu deren Herstellung nur Polycarbonsäuren eingesetzt werden, welche einen aromatischen Anteil aufweisen. Unter "aromatisch/aliphatischen Polyestern" werden solche Polyester verstanden, zu deren Herstellung aromatische und aliphatische Polycarbonsäuren eingesetzt werden. Dies gilt analog auch für die unten beschriebenen Polyetheresterpolyole. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Es können auch Polyole genutzt werden, die Ester- und/oder Amidgruppen und /oder Carbamatgruppen aus der Chemolyse von Polyurethanen enthalten wie sie z.B. unter den Handelsnamen Repol oder Renuva erhältlich sind.

Als aromatische Polycarbonsäuren können beispielsweise Phthalsäure, Isophthalsäure, Terephthalsäure, Trimellithsäure, Trimesinsäure (1,3,5-Benzoltricarbonsäure), Pyromellithsäure und/oder Derivate der Terephthalsäure, wie beispielsweise Polyalkylenterephthalate eingesetzt werden, insbesondere Phthalsäure und /oder Terephthalsäure und ihre Isomere und Derivate.

Beispiele für aliphatische Polycarbonsäuren sind Cyclohexandicarbonsäure, Endomethylentetrahydrophthalsäure, Adipinsäure, Azelainsäure, Sebacinsäure, Glutarsäure, Maleinsäure, Fumarsäure, Itaconsäure, Korksäure, Bernsteinsäure, 2-Methylbernsteinsäure, 3,3-Diethylglutarsäure, 2,2-Dimethylbernsteinsäure, Dodekandisäure, Dimerfettsäure, Trimerfettsäure und/oder Zitronensäure.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Rizinolsäure, Hydroxystearinsäure und dergleichen. Geeignete Lactone sind unter anderem Caprolacton, Butyrolacton und Homologe. In einer bevorzugten Ausführungsform werden keine Hydroxycarbonsäuren und / oder deren Derivate eingesetzt.

Verwendet werden können ebenso Derivate dieser Carbonsäuren, wie beispielsweise Dimethylterephthalat, Polyethylenterephthalat, Polybutylenterephthalat, Polyethylennaphthalat oder Polyethylenfuranoat.

Zur Herstellung der Polyesterpolyole kommen insbesondere auch biobasierte Ausgangsstoffe und/oder deren Derivate in Frage, wie z.B. Rizinusöl, Polyhydroxyfettsäuren, Ricinolsäure, Hydroxyl-modifizierte Öle, Weintraubenkernöl, schwarzes Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure und Ölsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren. Der anteilige Einsatz der oben genannten biobasierten Ausgangsstoffe, insbesondere von Fettsäuren bzw. Fettsäurederivaten (Ölsäure, Sojaöl etc.) kann Vorteile aufweisen, z.B. im Hinblick auf Lagerstabilität der Polyolformulierung, Dimensionsstabilität, Brandverhalten und Druckfestigkeit der Schäume.

Die Carbonsäuren können dabei sowohl einzeln als auch im Gemisch verwendet werden. Als Carbonsäuren werden bevorzugt Phthalsäureanhydrid, Terephthalsäure und/oder Isophthalsäure sowie Adipinsäure, Glutarsäure, Sebacinsäure und/oder Bernsteinsäure, und deren Mischungen verwendet.

Die Carbonsäuren werden für die Polyestersynthese mit Polyhydroxyverbindungen, insbesondere Diolen, Triolen und / oder Tetraolen umgesetzt. Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere und Neopentylglykol. Vorzugsweise verwendet werden Ethylenglykol und/oder Diethylenglykol. Daneben können auch Polyhydroxyverbindungen wie Trimethylolpropan, Glycerin, Erythrit, Pentaerythrit, Trimethylolbenzol oder Trishydroxyethylisocyanurat eingesetzt werden, wobei Glycerin und Trimethylolpropan bevorzugt sind. Es können zusätzlich auch einwertige Alkanole mit verwendet werden.

Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit 4 bis 6 Kohlenstoffatomen oder aromatische Dicarbonsäuren, die einzeln oder im Gemisch verwendet werden. Beispielhaft seien Korksäure, Azelainsäure, Decandicarbonsäure, Furandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit 1 bis 4 Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich und kann Vorteile aufweisen, z.B. im Hinblick auf Lagerstabilität der Polyolformulierung, Dimensionsstabilität, Brandverhalten und Druckfestigkeit der Schäume.

Als weitere Komponente zur Herstellung der Polyetheresterpolyole werden Polyetherpolyole eingesetzt, die man durch Alkoxylieren von Startermolekülen wie mehrwertigen Alkoholen erhält.

Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Diole wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können alleine oder in Mischung eingesetzt werden, sofern es sich nicht um Amine handelt.

Neben den Diolen können als Startermoleküle für die Herstellung der Polyether auch Verbindungen mit mehr als 2 Zerewitinoff-aktiven Wasserstoffen, besonders mit zahlenmittleren Funktionalitäten von 3 bis 8, insbesondere von 3 bis 6 mitverwendet werden, zum Beispiel 1,1,1-Trimethylolpropan, Glycerin, Sorbitan und Pentaerythrit sowie auf Triolen oder Tetraolen gestartete Polyethylenoxidpolyole.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

In einer bevorzugten Ausführungsform werden für die Herstellung der Polyesterpolyole bzw. Polyetheresterpolyole rezyklierte Ausgangsstoffe eingesetzt, beispielsweise rezykliertes Polyethylenterephthalat ("rPET"). Insbesondere kann die Komponente a1) ein Polyesterpolyol enthalten, welches aus rezykliertem Polyethylenterephthalat hergestellt ist.

Die Komponente a2) besteht in einer besonders bevorzugten Ausführungsform zu mindestens 40 Gew.-% aus aromatischen und / oder aromatisch/aliphatischen Poly(ether)esterpolyolen, was sich positiv auf die Brandeigenschaften des Hartschaums auswirkt.

Bevorzugt weist die Poly(ether)esterpolyol-Komponente a2) eine mittlere Funktionalität von $\geq$ 1,8 bis $\leq$ 2,5, und eine mittlere Hydroxylzahl zwischen 150 und 350 mg KOH/g auf. Besonders bevorzugt beträgt die mittlere Hydroxylzahl der Komponente a2) 160 bis 300 mg KOH/g und insbesondere bevorzugt von 180 - 260 mg KOH/g.

*Komponente a3)*

Die isocyanat-reaktive Komponente A) kann weitere Verbindungen mit isocyanat-reaktiven Funktionalitäten enthalten, welche unterschiedlich von a1) und a2) sind, beispielsweise weitere Polyole und niedermolekulare Verbindungen.

Die Polyole in a3) umfassen insbesondere Polyetherpolyole. Polyetherpolyole werden nach dem Fachmann bekannten Herstellungsmethoden erhalten, wie beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und/oder Imidazolderivate, unter Verwendung mindestens eines Startermoleküls, das 2 bis 8, vorzugsweise 2 bis 6 reaktive Wasserstoffatome gebunden enthält.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt ist Ethylenoxid. Die Alkylenoxide können in Kombination mit $CO_2$ umgesetzt werden.

Als Startermoleküle kommen beispielsweise in Betracht: Wasser oder organische Dicarbonsäuren, wie Bernsteinsäure, Adipinsäure, Phthalsäure und Terephthalsäure

Vorzugsweise verwendet werden zwei- oder mehrwertige Alkohole, wie Ethandiol, 1,2- und 1,3-Propandiol, Diethylenglykol, Dipropylenglykol, 1,4-Butandiol, 1,6-Hexandiol, Bisphenole, Glycerin, Trimethylolpropan, Pentaerythrit, Sorbit und Saccharose.

In einer bevorzugten Ausführungsform enthält die Komponente A) Polyetherpolyole mit einer OH-Zahl von 10 bis 80 KOH/g und einer mittleren Funktionalität von $\geq 2,0$ bis $\leq 3,0$. Diese sind bevorzugt hergestellt durch Alkoxylierung einer geeigneten Starterkomponente, mit einer Mischung aus Ethylenoxid (EO) und Propylenoxid (PO) mit einem EO-Gehalt von 15-70 Gew.% bezogen auf die Gesamtmenge von EO und PO. Diese Polyole sind bevorzugt in einer Menge von 5,0 - 15 Gew.-% (insbesondere 5,0 - 12 Gew.-%) in der Komponente A) enthalten.

Zu der Komponente a3) zählen auch Polycarbonatpolyole.

Polycarbonatpolyole sind Hydroxylgruppen aufweisende Polycarbonate, zum Beispiel Polycarbonatdiole. Diese entstehen in der Reaktion von Kohlensäurederivaten, wie Diphenylcarbonat, Dimethylcarbonat oder Phosgen, mit Polyolen, bevorzugt Diolen.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenole und lactonmodifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit $CO_2$ erhältlich sind.

Die Herstellungsverfahren der Polyole sind dem Fachmann aus der Fachliteratur bekannt.

In einer bevorzugten Ausführungsform weisen die in der Komponente A) verwendeten Polyole mehr als 70 mol%, bevorzugt mehr als 80 mol%, insbesondere mehr als 90 mol%, primäre OH-Gruppen auf.

Die Komponente a3) umfasst weiterhin auch Kettenverlängerungs- und/oder Vernetzungsmittel. Hierfür kommen insbesondere di- oder trifunktionelle Amine und Alkohole, insbesondere Diole und/oder Triole mit Molekulargewichten kleiner als 400 g/mol, vorzugsweise von 60 bis 300, zum Einsatz, z.B. Triethanolamin, Diethylenglykol, Ethylenglykol und Glycerin. Sofern zur Herstellung der Polyurethan-Hartschaumstoffe solche niedermolekularen isocyanatreaktiven Verbindungen Anwendung finden, kommen diese zweckmäßigerweise in einer Menge von bis zu 5 Gew.-%, bezogen auf das Gesamtgewicht der Komponente A, zum Einsatz.

Es können auch Verbindungen mit anderen isocyanat-reaktiven Funktionalitäten als Hydroxylfunktionen eingesetzt werden, z.B. Polyamine, Polyaminoalkohole und Polythiole und auch solche Verbindungen mit gemischten Funktionalitäten.

Verbindungen, welche sowohl unter die Definitionen von a1 und a3 fallen, werden der Komponente a1 zugerechnet. Verbindungen, welche sowohl unter die Definitionen von a2 und a3 fallen, werden der Komponente a2 zugerechnet. In einer besonders bevorzugten Ausführungsform sind in der isocyanat-reaktiven Komponente A) neben den hierin als bevorzugt angegebenen BPA-Harz-Ethoxylaten a1) und / oder als bevorzugt angegebenen Poly(ether) esterpolyolen a2) keine weiteren BPA-Harz-Ethoxylate bzw. Poly(ether)esterpolyole enthalten. Ganz besonders bevorzugt enthält die Komponente A) ausschließlich die isocyanat-reaktiven Komponenten a1 - a3.

Zur Herstellung der PUR/PIR - Hartschäume wird die isocyanat-reaktive Komponente A) mit Polyisocyanat B) in Gegenwart von Treibmittel C) und gegebenenfalls Katalysatoren D) und Hilfs- und Zusatzstoffen E) zur Reaktion gebracht.

In einer bevorzugten Ausführungsform wird eine Reaktionsmischung bestehend aus der isocyanat-reaktiven Komponente A), Polyisocyanat B), Treibmittel C), optional Katalysatoren D) und optional Hilfs- und Zusatzstoffen E) umgesetzt.

*Polyisocyanat B)*

Als Polyisocyanate kommen die für die Herstellung von PUR/PIR - Hartschaumstoffen verwendbaren aliphatischen, cycloaliphatischen und insbesondere aromatischen Di- und/oder Polyisocyanate in Frage. Bevorzugt verwendet werden Toluylendiisocyanat (TDI), Diphenylmethandiisocyanat (monomeres MDI) und insbesondere Gemische aus Diphenylmethandiisocyanat und Polyphenylenpolymethylenpolyisocyanaten (polymeres MDI, pMDI). Die Isocyanate können auch modifiziert sein, beispielsweise durch Einbau von Uretdion-, Carbamat-, Isocyanurat-, Carbodiimid-, Allophanat- und insbesondere Urethangruppen. Zur Herstellung von PUR/PIR-Hartschaumstoffen wird insbesondere pMDI eingesetzt.

Die Bildung von Isocyanuratstrukturen erfolgt nach gegenwärtigem Kenntnisstand praktisch ausschließlich während der Verschäumungsreaktion und führt zu flammwidrigen PUR/PIR-Schaumstoffen, welche bevorzugt im technischen Bereich, beispielsweise im Bauwesen als Dämmplatte, Sandwichelemente und LKW-Aufbauten eingesetzt werden.

Die Kennzahl der Reaktionsmischung liegt im allgemeinen bei einem Wert von 90 bis 600.

Unter der Isocyanat-Kennzahl (auch Kennzahl oder Isocyanat-Index genannt) wird dabei der Quotient aus der tatsächlich eingesetzten Stoffmenge [Mol] an Isocyanat-Gruppen und der tatsächlich eingesetzten Stoffmenge [Mol] an Isocyanat-reaktiven Gruppen, multipliziert mit 100, verstanden:

$$\text{Kennzahl} = (\text{Mole Isocyanat-Gruppen} / \text{Mole Isocyanat-reaktive Gruppen})*100$$

In einer Ausführungsform liegt die Kennzahl bevorzugt in einem Bereich von 180 bis 450, besonders bevorzugt zwischen 250 bis 400 und ganz besonders bevorzugt in einem Bereich von 300 bis 400. Dies bedeutet, dass der Überschuss an Polyisocyanat im Reaktionsgemisch zu Polyisocyanuratstrukturen (PIR) im Hartschaum führt. Diese wiederum bewirken, dass der Schaum an sich eine intrinsische Flammwidrigkeit aufweist.

Der NCO-Wert (auch: NCO-Gehalt, Isocyanatgehalt) wird bestimmt mittels EN ISO 11909 (Mai 2007).

*Treibmittel C)*

Weiterhin werden Treibmittel C) eingesetzt; der Begriff Treibmittel umfasst im Rahmen der vorliegenden Erfindung sowohl physikalische als auch chemische Treibmittel. Unter chemischen Treibmitteln werden dabei solche Verbindungen verstanden, die durch Reaktion mit Isocyanat gasförmige Produkte bilden. Demgegenüber werden unter physikalischen Treibmitteln solche Verbindungen verstanden, die in flüssiger oder gasförmiger Form eingesetzt werden und keine chemische Reaktion mit dem Isocyanat eingehen.

Unter physikalischen Treibmitteln versteht man Verbindungen, die in den Einsatzstoffen der Polyurethan-Herstellung gelöst oder emulgiert sind und unter den üblichen Reaktionsbedingungen verdampfen. Dabei handelt es sich beispielsweise um Kohlenwasserstoffe wie z.B. Cyclopentan, Isopentan und n-Pentan, Butan und Propan, halogenierte Kohlenwasserstoffe, und andere Verbindungen, wie zum Beispiel perfluorierte Alkane, wie Perfluorhexan, perfluorierte Alkene wie 1,1,1,2,3,4,5,5,5-Nonafluoro-4-(trifluoromethyl)pent-2-en, 1,1,1,3,4,4,5,5,5-Nonafluoro-2-(trifluoromethyl)pent-2-en oder cis-1,1,1,4,4,4-Hexafluoro-2-buten, Fluorchloralkene wie Trans- 1-chloro-3,3,3-trifluoropropen, sowie Ether, Ester, Ketone und/oder Acetale. Als Treibmittelkomponente (c) werden bevorzugt Kohlenwasserstoffe und/oder Wasser eingesetzt. Besonders bevorzugte Kohlenwasserstoffe sind n-Pentan, Cyclopentan, iso-Pentan und/oder Mischungen der Isomeren. Insbesondere werden Cyclopentan/Isopentan-Gemische und/oder n-Pentan als Treibmittel (c) verwendet.

Chemische Treibmittel sind beispielsweise Wasser und / oder Carbonsäuren, welche durch Reaktion mit Isocyanaten unter Harnstoff- bzw. Amidbildung Kohlendioxid freisetzen.

Die Treibmittelkomponente C) setzt man bevorzugt in Mengen von 0,1 bis 30 Gew.-%, bevorzugt 0,5 bis 20 Gew.-%, besonders bevorzugt 0,7 bis 15 Gew.-%, bezogen auf das Gesamtgewicht der Reaktionsmischung ein. In einer bevorzugten Ausführungsform enthält das Treibmittelgemisch C) Kohlenwasserstoffe, insbesondere n-Pentan und/oder Cyclopentan, insbesondere Cyclopentan/Isopentan-Gemische sowie Wasser.

Bevorzugt umfasst die Reaktionsmischung ein Treibmittel, das aus Wasser, Ameisensäure und/oder einem Kohlenwasserstoff besteht. Es ist also möglich, dass die Reaktionsmischung ein Treibmittel, das aus Wasser besteht, oder ein Treibmittel, das aus Ameisensäure besteht, oder ein Treibmittel, das aus einem Kohlenwasserstoff besteht, oder ein Treibmittel, das aus zwei oder drei der Vorgenannten besteht, enthält. In diesem Fall enthält die Reaktionsmischung also außer Wasser, Ameisensäure und/oder Kohlenwasserstoff kein weiteres Treibmittel. Unter Kohlenwasserstoff ist im Rahmen dieser Erfindung eine Verbindung zu verstehen, die ausschließlich Kohlen- und Wasserstoffatome enthält. Auch in diesem Fall kann der Kohlenwasserstoff aus mehreren verschiedenen Kohlenwasserstoffen bestehen.

Besonders bevorzugte Kohlenwasserstoffe sind n-Pentan, Cyclopentan, iso-Pentan und/oder Mischungen der Isomeren.

In einer bevorzugten Ausführungsform ist mindestens ein Polyisocyanat B) ausgewählt aus der Gruppe bestehend aus Toluylendiisocyanat (TDI), Diphenylmethandiisocyanat (MDI) und Polyphenylenpolymethylenpolyisocyanaten (Polymer-MDI) sowie aus deren Gemischen, und mindestens ein Treibmittel C)) ausgewählt aus der Gruppe bestehend aus Wasser, Cyclopentan, n-Pentan, iso-Pentan, Fluorkohlenwasserstoffe und teil-halogenierte Alkene mit 3 oder 4 KohlenstoffAtomen, sowie aus deren Gemischen.

Die Treibmittel C) können ganz oder teilweise vor dem Mischen der Komponenten A) und B) einer der beiden Komponenten, vorzugsweise der Komponente A), zugesetzt werden, und / oder sie werden direkt in die Reaktionsmischung eindosiert.

*Katalysatoren D)*

Als Katalysatoren D) für die Herstellung der erfindungsgemäßen PUR/PIR-Hartschaumstoffe können beispielsweise die bekannten Polyurethan- bzw. Polyisocyanuratbildungskatalysatoren eingesetzt werden, beispielsweise organische Zinnverbindungen, wie Zinndiacetat, Zinndioctoat, Dibutylzinndilaurat und/oder stark basische Amine wie 2,2,2-Diazabicyclooctan, Triethylamin, Triethylendiamin, Pentamethyldiethylentriamin, N,N-Dimethylcyclohexylamin oder Bis(N,N-Dimethylaminoethyl)ether, N,N-Dimethylbenzylamin und N-Methylimidazol, sowie zur Katalyse der PIR-Reaktion beispielsweise Kaliumacetat, Kaliumpropionat, Natriumacetat, Natrium-N-[(2-hydroxy-5-nonylphenyl)methyl]-N-methylaminoacetat, 2,4,6-Tris[(3-dimethylamino)propyl]-hexahydrotriazine, Kaliumoctoat und aliphatische quaternäre Ammoniumsalze, z.B. Tetramethylammoniumpivalat.

Die Katalysatoren werden vorzugsweise in Mengen von 0,05 bis 3 Gew.-%, vorzugsweise 0,06 bis 2 Gew.-%, bezogen auf das Gesamtgewicht aller Komponenten der Reaktionsmischung, eingesetzt.

Die Katalysatoren D) werden in der Regel mit der Komponente A) vermischt.

*Hilfs- und Zusatzstoffe E)*

Die Umsetzung der Reaktionsmischung erfolgt gegebenenfalls in Anwesenheit von Hilfs- und Zusatzstoffen E), z.B. Flammschutzmitteln, Füllstoffen, Zellreglern, Schaumstabilisatoren, oberflächenaktiven Verbindungen und/oder Stabilisatoren gegen oxidativen, thermischen oder mikrobiellen Abbau bzw. Alterung. Bevorzugt ist die Anwesenheit von Flammschutzmitteln und/oder Schaumstabilisatoren.

Als Schaumstabilisatoren werden Stoffe bezeichnet, welche die Ausbildung einer regelmäßigen Zellstruktur bei der Schaumbildung fördern. Beispielsweise sind genannt: Siliconhaltige Schaumstabilisatoren, wie Siloxan-Oxyalkylen-Mischpolymerisate und andere Organopolysiloxane, ferner Alkoxylierungsprodukte von Fettalkoholen, Oxoalkoholen, Fettaminen, Alkylphenolen, Dialkylphenolen, Alkylkresolen, Alkylresorcin, Naphthol, Alkylnaphthol, Naphtylamin, Anilin, Alkylanilin, Toluidin, Bisphenol-A, alkyliertem Bisphenol-A, Polyvinylalkohol, sowie weiterhin Alkoxylierungsprodukte von Kondensationsprodukten aus Formaldehyd und Alkylphenolen, Formaldehyd und Dialkylphenolen, Formaldehyd und Alkylkresolen, Formaldehyd und Alkylresorcin, Formaldehyd und Anilin, Formaldehyd und Toluidin, Formaldehyd und Naphthol, Formaldehyd und Alkylnaphthol sowie Formaldehyd und Bisphenol-A. Als Alkoxylierungsreagenzien können beispielsweise Ethylenoxid und/oder Propylenoxid eingesetzt werden.

E) umfasst bevorzugt auch Flammschutzmittel, insbesondere solche auf Phosphor-Basis. Vorzugsweise werden bei 25 °C flüssige, phosphorhaltige Flammschutzmittel verwendet umfassend TCPP, halogenfreie Phosphate wie z.B. Triethylphosphat (TEP), Trikresylphosphat, Diphenylkresylphosphat (DPK), tert-Butylphenyldiphenylphosphat, Resorcinyldiphenylphosphat (auch als Oligomer), sowie polymere Reaktionsprodukte aus Phosphorylchlorid mit Alkoholen, z.B. mit Diethylenglykol und Isobutanol (Levagard 3000), und Phosphonate, z.B. Diethylethylphosphonat (DEEP), Dimethylpropylphosphonat (DMPP), Veriquel® R100 bzw. "E06-16" von der Fa. ICL, und auch gemischte Phosphonate wie Ethylbutylhydroxymethylphosphonat. Weiterhin geeignete Flammschutzmittel sind Phosphazene, wie z.B. Hexaphenoxycyclophosphazen und seine Derivate wie z.B. Trimethoxytriphenoxyphosphazen und Kresylphenoxyphosphazene, sowie Phosphinate wie 9,10-Dihydro-9-oxa-10-phosphorylphenanthrene-10-oxid (DOPO) und seine Addukte an alphaungesättigte Carbonsäuren, wässrige Lösungen von Natriumphosphinat und Natriumdiethylphosphinat sowie flüssige Dialkylhypophosphorige Ester. Weiterhin geeignete Flammschutzmittel sind Phosphinoxide, wie beispielsweise Tris(hydroxymethyl)phosphinoxid, Isobutyl-bis(hydroxymethyl)phosphinoxid und Isobutyl-bis(3-hydroxypropyl)phosphinoxid,

In einer bevorzugten Ausführungsform weist mindestens eines der eingesetzten Flammschutzmittel einen Schmelzpunkt unterhalb 21,5 °C auf.

Bevorzugt eingesetzt werden Triethylphosphat, Tris-(2-chlorpropyl)phosphat, Hydroxymethylphosphonaten und Mischungen daraus, insbesondere Triethylphosphat und seine Mischungen mit Hydroxymethylphosphonaten. In einer weiteren bevorzugten Ausführungsform werden keine halogenhaltigen Flammschutzmittel und / oder keine Triarylphosphate eingesetzt.

Auch Fest- bzw. Füllstoffe können enthalten sein, beispielsweise die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. Weitere geeignete anorganische Fest - bzw. Füllstoffe sind silikatische Mineralien, beispielsweise Schichtsilikate wie z.B. Antigorit, Serpentin, Hornblenden, Amphibole, Chrisotil, Montmorillonit und Talkum, Metalloxide, wie Ferrite, Vanadium - und Wolframoxide, Kaolin und Aluminiumoxide, Metallsalze, wie Kreide, und anorganische Pigmente sowie Glas u.a. sowie natürliche und synthetische faserförmige Mineralien wie Wollastonit, Metall- Carbon und insbesondere Glasfasern verschiedener Länge, die gegebenenfalls geschlichtet sein können. Auch Ammoniumpolyphosphate, roter Phosphor und expandierbarer Graphit können geeignet sein. Als organische Füllstoffe kommen beispielsweise in Betracht: Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und Kohlenstofffasern.

Die Hilfs- und Zusatzstoffe E) können auch über isocyanat-reaktive Gruppen verfügen und in die Polymerstruktur eingebaut werden. Wenn sie unter eine der Definition von a1 - a3 fallen, werden sie mengenmäßig jeweils dieser Komponente und nicht der Komponente E) zugerechnet.

Nähere Angaben über die oben genannten und weitere Ausgangsstoffe sind der Fachliteratur, beispielsweise dem Kunststoffhandbuch, Band VII, Polyurethane, Carl Hanser Verlag München, Wien, 1., 2. und 3. Auflage 1966, 1983 und 1993, zu entnehmen.

In einer ersten Ausführungsform, die eine für die Herstellung von Verbundelementen besonders geeignete Formulierung darstellt, enthält die Komponente A eine Polyolmischung umfassend

5 - 64,0 Gew.-% bevorzugt 10,0 - 60,0 Gew.-% und mehr bevorzugt 12,0 -58,0 Gew.-% BPA-Harz-Ethoxylat,

36,0 - 90,0 Gew.-%, bevorzugt 40,0-85,0 Gew.-% (besonders bevorzugt 50-80 Gew.-%) eine oder mehrere Polyolverbindungen ausgewählt aus der Gruppe bestehend aus Polyesterpolyolen und / oder Polyetheresterpolyolen mit einer mittleren Hydroxylzahl von 150 mg KOH/g bis $\leq$ 350 mg KOH/g und einer mittleren Funktionalität von 1,8 bis 2,5, wobei mindestens 40 Gew.-% der Komponente A) ausgewählt sind aus der Gruppe bestehend aus aromatischen Polyesterpolyolen, aromatisch/aliphatischen Polyesterpolyolen, aromatischen Polyetheresterpolyolen und aromatisch/aliphatischen Polyetheresterpolyolen,

0,0 - 15 Gew.-% (bevorzugt 7,0 - 12 Gew.-%) einer Polyolkomponente bestehend aus einem oder mehreren Polyolen ausgewählt aus Polyetherpolyolen mit einer OH-Zahl von 10 bis 80 KOH/g und einer mittleren Funktionalität von $\geq$ 2,0 bis $\leq$ 3,0, hergestellt durch Alkoxylierung einer geeigneten Starterkomponente, und

optional weitere isocyanat-reaktive Verbindungen, insbesondere niedermolekulare Verbindungen (Kettenverlängerer und / oder Vernetzer), welche nicht unter die Definition einer der anderen Komponenten fallen,

wobei die Angaben in Gew.-% jeweils auf alle Komponenten der isocyanat-reaktiven Zusammensetzung A) bezogen sind.

In einer zweiten Ausführungsform, die eine für die Herstellung von Dämmplatten besonders geeignete Formulierung darstellt, enthält die Komponente A eine Polyolmischung umfassend

5 - 64,0 Gew.-% , bevorzugt 10,0 - 60,0 Gew.-%. und mehr bevorzugt 12,0 -58,0 Gew.-%. BPA-Harz-Ethoxylat,

36,0 bis 90,0 Gew.-% mindestens einer Verbindung ausgewählt aus der Gruppe enthaltend Polyesterpolyolen und Polyetheresterpolyolen mit einer Hydroxylzahl im Bereich von 80 mg KOH/g bis 350 mg KOH/g,

0 - 15,0 Gew.-% (bevorzugt 6,0 - 12 Gew.-%) einer Polyolkomponente bestehend aus einem oder mehreren Polyolen ausgewählt aus Polyetherpolyolen mit einer OH-Zahl von 10 bis 80 KOH/g und einer mittleren Funktionalität von $\geq$ 2,0 bis $\leq$ 3,0, hergestellt durch Alkoxylierung einer geeigneten Starterkomponente, und

optional weitere isocyanat-reaktive Verbindungen, insbesondere niedermolekulare Verbindungen (Kettenverlängerer und / oder Vernetzer), welche nicht unter die Definition einer der anderen Komponenten fallen,

wobei die Angaben in Gew.-% jeweils auf alle Komponenten der isocyanat-reaktiven Zusammensetzung A) bezogen sind.

Die erfindungsgemäßen PUR/PIR-Hartschaumstoffe zeigen ein besonders günstiges Aushärteverhalten (gemessen an der Eindrucktiefe nach Herstellung des Freischaums). Weiterhin zeigen die erfindungsgemäßen PUR/PIR-Hartschaumstoffe überraschenderweise auch ein günstiges niedriges Wasseraufnahmeverhalten, verglichen mit Schäumen, die mit BPA - Harz als alleiniger Polyolkomponente hergestellt wurden.

Die PUR/PIR-Hartschaumstoffe können diskontinuierlich oder kontinuierlich mit Hilfe bekannter Verfahren hergestellt werden. Dem Fachmann bekannt sind u.a. die Blockschaumherstellung (kontinuierlich und diskontinuierlich), die Verwendung in Einkomponentensystemen (diskontinuierlich) und im Isolierformschaum (diskontinuierlich). Die hier beschriebene Erfindung bezieht sich auf alle Verfahren. Ein bevorzugtes Verfahren ist das kontinuierliche Doppelbandverfahren zur Herstellung von Verbundelementen enthaltend PUR/PIR-Hartschaumstoffkerne und eine oder mehrere Deckschicht(en), wobei als Deckschichten flexible und/oder starre Materialien verwendet werden können.

Materialien, aus denen die Deckschicht besteht, sind beispielsweise Beton, Holz, Pressspan, Aluminium, Kupfer, Stahl, Edelstahl, Papier, Mineralvliese und Kunststoff sowie Mehrlagenverbünde. Bevorzugte Kunststoffe sind Acrylnitril-Butadien-Styrol-Copolymere, Polyethylen, Polystyrol, Polyvinylchlorid und Polypropylen. Die Art der Deckschicht ist dabei grundsätzlich nicht begrenzt; es kann sich um Formteile, Konstruktionselemente aus dem Bauwesen, Rohre, Gehäuseteile, etc. handeln.

Die erfindungsgemäßen Hartschaumstoffe umfassen Polyurethan-Hartschaumstoffe und Polyurethan-/Polyisocyanurat-Hartschaumstoffe und weisen bevorzugt eine Geschlossenzelligkeit von größer 90 %, besonders bevorzugt größer 95% auf.

Bevorzugt weisen die erfindungsgemäßen Hartschaumstoffe eine Dichte von 25 g/m$^3$ bis 300 g/m$^3$, besonders bevorzugt von 28 g/m$^3$ bis 50 g/m$^3$ auf.

Der Einsatz der erfindungsgemäßen PUR/PIR - Hartschaumstoffe erfolgt insbesondere zur Wärmedämmung, beispielsweise von Kühlgeräten, Behältern oder Gebäuden, z.B. in Form von gedämmten Rohren, Sandwichelementen, Dämmplatten oder als Dämmschicht in Kühlgeräten.

Die Erfindung soll anhand der nachfolgenden Beispiele näher erläutert werden.

**Beispiele**

**1. Methoden und Begriffe**

| | |
|---|---|
| OH-Zahl: | Die Bestimmung der OH-Zahl (Hydroxylzahl) erfolgte gemäß der Vorschrift der DIN 53240-1 (Verfahren ohne Katalysator, Juni 2013). |
| Kennzahl: | Bezeichnet das mit 100 multiplizierte molare Verhältnis von NCOzu NCO-reaktiven Gruppen einer Rezeptur |
| Rohdichte: | Die Rohdichte wurde gemäß DIN EN ISO 3386-1 (Oktober 2015) bestimmt. |
| Eindrucktiefe: | Die Eindrucktiefe an frisch hergestellten Laborschäumen in Testpäckchen mit einer Grundfläche von 20 x 20 cm$^2$ wird über die Messung der Eindringtiefe eines Stempels mit definiertem Stempeldruck nach den angegebenen Zeitspannen während der Aushärtephase bestimmt. |
| Wasseraufnahme: | Die Wasseraufnahme wurde an einem 9 x 9 x 6 cm Schaumwürfel bestimmt. Der Probekörper wird in einem mit Wasser gefüllten Exsikkator vollständig untergetaucht und der Exsikkator verschlossen. Nachdem der Exsikkator für eine Minute bei 100 mbar evakuiert wurde, wird er belüftet und der Probekörper 30 Sekunden lang abtropfen gelassen. Die Wasseraufnahme wird als Gewichtsdifferenz zwischen dem abgetropftem Probekörper zum Probekörper vor dem Vakuumtauchversuch angegeben. |
| Maximale mittlere Flammhöhe: | Die maximale mittlere Flammhöhe wurde nach DIN EN ISO 11925-2 (Februar 2020) bestimmt. Die Einstufung der Brandklasse erfolgt nach DIN EN 13501-1 (Mai 2019). |

**2. Materialien**

| | |
|---|---|
| a1-1 | Polyetherpolyol der Fa. Covestro Deutschland AG auf Basis von BPA-Harz und Ethylenoxid mit einer OH-Zahl von 185 mg KOH/g |

(fortgesetzt)

| | | | | |
|---|---|---|---|---|
| a2-1 | Polyesterpolyol der Fa. Covestro Deutschland AG auf Basis von Phthalsäureanhydrid, Adipinsäure, Ethylenglykol und Diethylenglykol mit einer OH-Zahl von 240 mg KOH/g | | | |
| a3-1 | Polyetherpolyol der Fa. Covestro Deutschland AG auf Basis von Propylenglykol, Ethylenoxid und Propylenoxid im Verhältnis 30 %/70 % mit einer OH-Zahl von 28 mg KOH/g | | | |
| B-1 | Desmodur 44V70L. polymeres Polyisocyanat auf Basis von 4,4'-Diphenylmethandiisocyanat der Fa. Covestro Deutschland AG mit einem NCO-Gehalt von ca. 31,5 Gew.% | | | |
| C-1 | n-Pentan | | | |
| C-2 | Wasser | | | |
| D1 | Desmorapid 1792. Katalysator der Fa. Covestro Deutschland AG mit 25 Gew.% Kaliumacetat | | | |
| D2 | Polycat 520, Aminkatalysator der Fa. Evonik Industries AG auf Basis von Pentamethyldiethylentriamin und Diethylenglykol | | | |
| E-1 | TCPP, Tris(1-chloro-2-propyl)-phosphat (Flammschutzmittel der Fa. Lanxess GmbH) | | | |
| E-2 | Tegostab B8443, Silikonstabilisator der Fa. Evonik Industries AG | | | |

**Herstellung von PUR-/PIR-Hartschaumstoffen - Freischäume**

Alle Schäume in Tabelle 1 wurden mittels Handvermischung im Labormaßstab in Testpäckchen mit Grundfläche 20 x 20 cm$^2$ hergestellt. Die Polyolkomponente enthaltend die Polyole, Additive und Katalysatoren werden vorgelegt. Kurz vor der Vermischung wird die Polyolkomponente auf 23 - 25 °C temperiert, wohingegen die Polyisocyanatkomponente auf eine konstante Temperatur von 30 - 35 °C gebracht wird. Anschließend wird unter Rühren die Polyisocyanatkomponente zur Polyolmischung gegeben, zu der die zur Erreichung einer Kernrohdichte von 38 - 40 kg/m$^3$ benötigte Menge an Pentan zuvor zugewogen worden ist. Die Mischzeit beträgt 6 sec und die Mischgeschwindigkeit des Pendraulik-Rührers beträgt 4200 min$^{-1}$. Nach 2,5 bzw. 5 Minuten wird die Schaumhärte mittels einer Eindruck-Methode bestimmt. Der Schaum wird anschließend für weitere 24 Stunden 20 bei 23 °C gelagert, damit dieser nachreagieren kann.

Tabelle 1: Ausgangskomponenten und Eigenschaften von PUR/PIR - Hartschäumen

| Beispiel | | 1* | 2 | 3* |
|---|---|---|---|---|
| a2-1 | Teile | 72,2 | 36,1 | |
| a1-1 | Teile | | 36,1 | 72,2 |
| a3-1 | Teile | 7,6 | 7,6 | 7,6 |
| E-1 | Teile | 15 | 15 | 15 |
| C-2 | Teile | 1,2 | 1,2 | 1,2 |
| E-2 | Teile | 4 | 4 | 4 |
| D-2 | Teile | 1,2 | | |
| D-1 | Teile | 4,0 | 3,2 | 2,2 |
| C-1 | Teile | 15,7 | 13,8 | 12,4 |
| B-1 | Teile | 225 | 197 | 175 |
| Index | | 317 | 317 | 316 |
| Startzeit | s | 12 | 11 | 7 |
| Abbindezeit | s | 39 | 40 | 38 |
| Klebfreizeit | s | 49 | 58 | 64 |
| Eindrucktiefe nach 2,5 min | mm | 7,4 | 4,8 | 7,3 |
| Eindrucktiefe nach 5 min | mm | 8,6 | 5,7 | 8,2 |
| Rohdichte | kg/m$^3$ | 34,8 | 34,7 | 35,4 |
| Wasseraufnahme | g | 7,3 | 7,1 | 8,9 |

(fortgesetzt)

| Beispiel | | 1* | 2 | 3* |
|---|---|---|---|---|
| Max. mittlere Flammhöhe | mm | 113 | 111 | 108 |
| (Beispiele mit * sind nicht erfindungsgemäß) | | | | |

Die Beispiele 1 - 3 zeigen, dass die Verwendung von erfindungsgemäßen Polyolmischungen zu einer verbesserten Durchhärtung führt bei gleichbleibend guten Brandeigenschaften und Geschlossenzelligkeit (gemessen an der Wasseraufnahme). Desweiteren zeichnet sich die erfindungsgemäße Polyolformulierung durch eine hohe Eigenreaktivität aus.

**Patentansprüche**

1. Eine isocyanat-reaktive Komponente A) geeignet für die Herstellung von PUR/PIR - Hartschäumen, enthaltend eine Komponente a1) bestehend aus BPA-Harz Ethoxylaten und eine Komponente a2) bestehend aus Poly(ether) esterpolyolen, **dadurch gekennzeichnet, dass** das Massenverhältnis von a1 : a2 = 0,05 - 1,80 beträgt, die Gesamtmenge an a1 und a2 mindestens 50 Gew.-%, bezogen auf die Gesamtmenge der isocyanat-reaktiven Komponente, beträgt und die isocyanat-reaktive Komponente im Wesentlichen kein Amin-gestartetes Polyetherpolyol enthält.

2. Isocyanat-reaktive Komponente A) gemäß Anspruch 1, **dadurch gekennzeichnet, dass** sie

    a1) 5 - 64,0 Gew.-%, bevorzugt 10,0 - 60,0 Gew.-% und mehr bevorzugt 12,0 - 58,0 Gew.-% BPA-Harz-Ethoxylate, und
    a2) 36,0 - 95,0 Gew.-%, bevorzugt 40 - 90 Gew.-%, mehr bevorzugt 40,0 - 80,0 Gew.-%, Poly(ether)esterpolyole, jeweils bezogen auf die Gesamtmenge an a1 und a2, enthält.

3. Isocyanat-reaktive Komponente A) gemäß einem der vorangehenden Ansprüche, **dadurch gekennzeichnet, dass** das BPA-Harz-Ethoxylat a1)

    i. mindestens 10 Gew.-%, bevorzugt mindestens 20 Gew.-%, besonders bevorzugt mindestens 30 Gew.-% eines Ethoxylates von 4,4'-Isopropylidendiphenol,
    ii. mindestens 5 Gew.-%, bevorzugt mindestens 10 Gew.-%, eines Ethoxylates von 2,4'- und 2,2'-Isopropylidendiphenol, und
    iii. mindestens 10 Gew.-%, bevorzugt mindestens 20 Gew.-%, außerdem bevorzugt mindestens 30 Gew.-%, besonders bevorzugt 40 Gew.-% eines Ethoxylates weiterer Komponenten, die Strukturelemente enthalten, welche von Phenol, Aceton und / oder Isopropylidendiphenol abgeleitet sind (ausschließlich der Isomeren des Isopropylidendiphenols),

    umfasst, wobei sich die Angaben in Gew.-% jeweils auf das Gesamtgewicht der Zusammensetzung beziehen.

4. Isocyanat-reaktive Komponente A) gemäß einem der vorangehenden Ansprüche, **dadurch gekennzeichnet, dass** die Komponente a2) zu mindestens 40 Gew.-% aus aromatischen und / oder aromatisch/aliphatischen Poly(ether) esterpolyolen besteht.

5. Isocyanat-reaktive Komponente A) gemäß einem der vorangehenden Ansprüche, **dadurch gekennzeichnet, dass** die Komponente a2) eine mittlere Funktionalität von $\geq 1,8$ bis $\leq 2,5$ und eine mittlere Hydroxylzahl zwischen 150 und 350 mg KOH/g aufweist.

6. Isocyanat-reaktive Komponente A) gemäß einem der vorangehenden Ansprüche, zusätzlich enthaltend weitere isocyanat-reaktive Komponenten a3), welche unterschiedlich von a1) und a2) sind.

7. Isocyanat-reaktive Komponente A) gemäß Anspruch 6, **dadurch gekennzeichnet, dass** die Komponente a3) Polyetherpolyole umfasst.

8. Isocyanat-reaktive Komponente A) gemäß Anspruch 7, **dadurch gekennzeichnet, dass** die Komponente a3) Polyetherpolyole mit einer OH-Zahl von 10 bis 80 KOH/g und einer mittleren Funktionalität von $\geq 2{,}0$ bis $\leq 3{,}0$, enthält.

9. Isocyanat-reaktive Komponente A) gemäß einem der vorangehenden Ansprüche, **dadurch gekennzeichnet, dass** sie folgende Komponenten enthält:

   5 - 64,0 Gew.-% bevorzugt 10,0 - 60,0 Gew.-% und mehr bevorzugt 12,0 - 58,0 Gew.-% BPA-Harz-Ethoxylat,
   36,0 - 90,0 Gew.-%, bevorzugt 40,0 - 85,0 Gew.-% (besonders bevorzugt 50 - 80 Gew.-%) eine oder mehrere Polyolverbindungen ausgewählt aus der Gruppe bestehend aus Polyesterpolyolen und / oder Polyetheresterpolyolen mit einer mittleren Hydroxylzahl von 150mg KOH/g bis $\leq 350$ mg KOH/g,
   0,0 - 15 Gew.-% (bevorzugt 6,0 - 12 Gew.-%) einer Polyolkomponente bestehend aus einem oder mehreren Polyolen ausgewählt aus Polyetherpolyolen mit einer OH-Zahl von 10 bis 80 KOH/g und einer mittleren Funktionalität von $\geq 2{,}0$ bis $\leq 3{,}0$, hergestellt durch Alkoxylierung einer geeigneten Starterkomponente,
   optional weitere isocyanat-reaktive Verbindungen, insbesondere niedermolekulare Verbindungen (Kettenverlängerer und / oder Vernetzer), welche nicht unter die Definition einer der anderen Komponenten fallen,
   wobei die Angaben in Gew.-% jeweils auf alle Komponenten der isocyanat-reaktiven Zusammensetzung A) bezogen sind.

10. Isocyanat-reaktive Komponente A) gemäß einem der Ansprüche 1 - 9, **dadurch gekennzeichnet, dass** sie weiterhin folgende Komponente enthält:
    6,0 - 12 Gew.-%, bezogen auf das Gesamtgewicht der isocyanat-reaktiven Komponente, einer Polyolkomponente bestehend aus einem oder mehreren Polyolen ausgewählt aus Polyetherpolyolen mit einer OH-Zahl von 10 bis 80 KOH/g und einer mittleren Funktionalität von $\geq 2{,}0$ bis $\leq 3{,}0$, hergestellt durch Alkoxylierung einer geeigneten Starterkomponente.

11. Reaktionsmischung zur Herstellung von PUR/PIR - Hartschaumstoffen, **dadurch gekennzeichnet, dass** sie aus einer isocyanat-reaktiven Komponente A) gemäß einem der Ansprüche 1 - 10, Polyisocyanat B), Treibmittel C), optional Katalysatoren D) und optional Hilfs- und Zusatzstoffen E) besteht.

12. Verfahren zur Herstellung von PUR/PIR - Hartschaumstoffen, umfassend die Umsetzung einer isocyanat-reaktiven Komponente A) gemäß einem der Ansprüche 1 - 10 mit einem Polyisocyanat B) in Gegenwart eines Treibmittels C) und gegebenenfalls Katalysatoren D) und Hilfs- und Zusatzstoffen E) bei einer Kennzahl von 180 bis 450.

13. Verfahren gemäß Anspruch 12, **dadurch gekennzeichnet, dass** es sich bei dem Polyisocyanat B) um polymeres MDI handelt und die Kennzahl 180 bis 450, besonders bevorzugt 250 bis 400 und ganz besonders bevorzugt 300 bis 400 beträgt.

14. Verfahren gemäß einem der Ansprüche 11, 12 oder 13, bei dem die Verschäumung gegen wenigstens eine Deckschicht unter Bildung eines Verbundelements umfassend den PUR/PIR-Hartschaumstoff und wenigstens eine Deckschicht durchgeführt wird.

15. PUR/PIR-Hartschaumstoff, erhältlich nach einem Verfahren gemäß einem der Ansprüche 11 bis 14.

Europäisches Patentamt
European Patent Office
Office européen des brevets

# EUROPÄISCHER RECHERCHENBERICHT

**Nummer der Anmeldung**

EP 25 19 9251

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP H09 328530 A (TOYO TIRE & RUBBER CO) 22. Dezember 1997 (1997-12-22) * Absatz [0001]; Ansprüche 1-3 * * Absatz [0022] - Absatz [0030]; Beispiele 3-7; Tabelle 1 * | 1-15 | INV. C08G18/48 C08G18/16 C08G18/18 C08G18/22 C08G18/40 |
| X,D | JP H09 71628 A (SANYO CHEMICAL IND LTD) 18. März 1997 (1997-03-18) * Absatz [0001]; Ansprüche 1-3 * * Absatz [0026]; Beispiel 2 * * Absatz [0035] * * Absatz [0007] * | 1-15 | C08G18/42 C08G18/76 C08J9/00 C08J9/08 C08J9/14 C08G18/09 |
| X,D | JP 2011 017027 A (ASAHI GLASS CO LTD) 27. Januar 2011 (2011-01-27) * Absatz [0001]; Ansprüche 1-7 * * Absätze [0046], [0053] - [0058], [0063]; Beispiele 26, 27; Tabelle 4 * | 1-15 | ADD. C08G101/00 |
| X,D | WO 98/37116 A1 (SUMITOMO BAYER URETHANE CO [JP]; INAZAWA YASUO [JP]; ODANI KEI [JP]) 27. August 1998 (1998-08-27) * Seite 1, Zeile 4 - Zeile 10; Ansprüche 1, 2 * * Seite 13, Zeile 12 - Zeile 13 * * Seite 18, Zeile 1 - Seite 22, Zeile 16; Beispiel 4; Tabellen 1, 2 * | 1-15 | |
| X,D | DE 698 02 846 T2 (SUMITOMO BAYER URETHANE CO [JP]) 13. Juni 2002 (2002-06-13) * Seite 1, Zeile 1 - Zeile 5; Ansprüche 1, 2 * * Seite 8, Zeile 7 - Seite 12, Zeile 10; Beispiel 7; Tabellen 1, 2 * -/-- | 1-15 | |

**RECHERCHIERTE SACHGEBIETE (IPC)**

C08G
C08J

Der vorliegende Recherchenbericht wurde für alle Patentansprüche erstellt

| Recherchenort | Abschlußdatum der Recherche | Prüfer |
|---|---|---|
| München | 19. Dezember 2025 | Paulus, Florian |

Seite 1 von 2

| Europäisches Patentamt European Patent Office Office européen des brevets | **EUROPÄISCHER RECHERCHENBERICHT** | **Nummer der Anmeldung** **EP 25 19 9251** |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | US 2011/046251 A1 (WADA HIROSHI [JP] ET AL) 24. Februar 2011 (2011-02-24) * Absätze [0001], [0015] - [0018]; Ansprüche 1-9 * * Absatz [0159] - Absatz [0208]; Beispiel 7; Tabelle 2 * ----- | 1-15 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 19. Dezember 2025 | Paulus, Florian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 25 19 9251

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

19-12-2025

| Im Recherchenbericht angeführtes Patentdokument | Datum der Veröffentlichung | Mitglied(er) der Patentfamilie | Datum der Veröffentlichung |
|---|---|---|---|
| JP H09328530 A | 22-12-1997 | KEINE | |
| JP H0971628 A | 18-03-1997 | JP 3107997 B2 | 13-11-2000 |
| | | JP H0971628 A | 18-03-1997 |
| JP 2011017027 A | 27-01-2011 | JP 5263259 B2 | 14-08-2013 |
| | | JP 2011017027 A | 27-01-2011 |
| WO 9837116 A1 | 27-08-1998 | AU 5880098 A | 09-09-1998 |
| | | JP 3919824 B2 | 30-05-2007 |
| | | JP 2001524995 A | 04-12-2001 |
| | | WO 9837116 A1 | 27-08-1998 |
| DE 69802846 T2 | 13-06-2002 | CA 2227295 A1 | 21-07-1998 |
| | | DE 69802846 T2 | 13-06-2002 |
| | | DK 0854159 T3 | 08-04-2002 |
| | | EP 0854159 A1 | 22-07-1998 |
| | | ES 2169446 T3 | 01-07-2002 |
| | | JP 3618188 B2 | 09-02-2005 |
| | | JP H10204143 A | 04-08-1998 |
| | | PL 324368 A1 | 03-08-1998 |
| | | US 5872156 A | 16-02-1999 |
| | | US 5874021 A | 23-02-1999 |
| US 2011046251 A1 | 24-02-2011 | CN 102046684 A | 04-05-2011 |
| | | EP 2284207 A1 | 16-02-2011 |
| | | JP 5459206 B2 | 02-04-2014 |
| | | JP WO2009145236 A1 | 13-10-2011 |
| | | US 2011046251 A1 | 24-02-2011 |
| | | WO 2009145236 A1 | 03-12-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3294787 A
- JP H0971628 A
- JP 2011017027 A
- WO 9837116 A1
- DE 69802846 T2
- US 2011046251 A1
- US 20140243560 A1

**In der Beschreibung aufgeführte Nicht-Patentliteratur**

- Polyurethane. Kunststoffhandbuch. Carl Hanser Verlag, 1966, vol. VII